# EUROPEAN PATENT APPLICATION

(11) **EP 3 733 360 A1**
(43) Date of publication of application: **04.11.2020**
(21) Application number: 20172010.9
(22) Date of filing: 29.04.2020
(51) Int. Cl.: B25J 19/02, B25J 9/16

(54) **A SYSTEM FOR PREVENTING COLLISIONS IN A ROBOTIC CELL ENVIRONMENT**

(30) Priority: 29.04.2019 GB 201905982
(71) Applicant: Arrival Limited, London W14 8TS (GB)
(72) Inventor: SVITKOV, Konstantin, London, W14 8TS (GB); RYBNIKOV, Alexander, London, W14 8TS (GB)
(74) Representative: Korenberg, Alexander Tal

(57) **Abstract**

A method for preventing collisions in a robotic cell environment, the method comprising, determining a critical area for at least one visual identifier within the robotic cell environment, determining an error area for the visual identifier relative to the critical area, detecting movement of the visual identifier within the robotic cell environment corresponding to an action occurring within the robotic cell environment, determining a location of the visual identifier, determining if the location of the visual identifier lies within the error area, wherein if the location of the visual identifier is determined to be within the critical area, allowing the action to continue within the robotic cell environment, wherein if the location of the visual identifier is determined to be within the error area, performing one or more pre-determined actions.

## Description

### Field

This disclosure relates to a system and a method for preventing collisions in a robotic cell environment.

**Background** In any robotic cell environment facilitating automated manufacturing one of the primary concerns is the positioning of the one or more robots in the cell relative to the objects which the robot is to interact with, other features of the cell environment, and other robots within the cell environment. As the robots carry out their predetermined actions within the robotic cell environment it is vital that collisions with other objects within the environment, such as those mentioned previously, do not occur as such collisions can cause a significant amount of damage to the robot and/or the object with which it collides, which can lead to an extended period of downtime during which the manufacturing process is completely stalled, leading to a significant loss in revenue. The movement of the robots and the interactions of the robots with objects within the robotic cell environment is typically governed by a computer vision system comprising one or more cameras which are arranged to view the robotic cell environment which are coupled to a robot cell controller which is in turn communicatively coupled to the one or more robots within the robotic cell environment. The accuracy of the computer vision system with regards to accurately determining the position and orientation of the robots and objects within the robotic cell environment is a key element in the correct operation of the robotic cell.

Accordingly it is a desire of the present disclosure to provide a system and method for preventing collisions in a robotic cell environment.

### Summary

A method for preventing collisions in a robotic cell environment is disclosed, the method comprising:
a) Determining a critical area for at least one visual identifier within the robotic cell environment;
b) Determining an error area for the visual identifier relative to the critical area;
c) Detecting movement of the visual identifier within the robotic cell environment corresponding to an action occurring within the robotic cell environment:
d) Determining the location of the visual identifier;
e) Determining if the location of the visual identifier lies within the error area;
f) Wherein if the location of the visual identifier is determined to be within the critical area, allowing the action to continue within the robotic cell environment;
g) Wherein if the location of the visual identifier is determined to be within the error area, performing one or more pre-determined actions.

Preferably, the visual identifier is mounted upon one or more parts of a robot, and the movement of the visual identifier and the action occurring within the robotic cell environment correspond to the movement of the one or more parts of the robot.

Ideally, the critical area comprises an area within which the robot is intended to displace within the robotic cell environment.

Preferably, the error area comprises an area within which the robot is not intended to displace within the robotic cell environment.

Ideally, the pre-determined action comprises determining if the location of the visual identifier can be altered,

Preferably, wherein if the location can be altered, altering the position and repeating steps d), e) and f) or g).

Ideally, wherein if the location cannot be altered, stopping movement of the one or more parts of the robot.

Preferably, wherein if the location cannot be altered, determining if there is a pre-set action to be performed, performing said pre-set action.

Ideally, said pre-set action comprises issuing a notification to a user within or in communication with the robotic cell environment.

Preferably, each error area for each visual identifier has a different associated pre-set action.

Ideally, the pre-set action comprises issuing an audible or visual notification to the user.

Preferably, wherein determining a critical area for at least one visual identifier within the robotic cell environment further comprises determining a plurality of critical areas for a plurality of visual identifiers within the robotic cell environment, determining a plurality of corresponding error areas for each visual identifier.

Ideally, wherein determining the error areas comprises
a). Obtaining one or more pre-determined real values of the positioning and/or orientation of a visual identifier located within the robotic cell environment;
b). Acquiring an image of the robotic cell environment using a camera located at a first positon within the robotic cell environment;
c). Calculating one or more values of the positioning and/or orientation of the visual identifier using the acquired image;
d). Comparing the real value of the positioning and/or orientation of the visual identifier within the robotic cell environment with the calculated value of the positioning and/or orientation of the visual identifier within the robotic cell environment;
e). Determining an error value comprising the difference between the real and calculated values;
f). Repeating steps a) to e) for a plurality of other visual identifiers located within the robotic cell environment; and
g). Estimating a maximum potential error value for the calculated value of at least one of the visual identifiers of the plurality of visual identifiers based on at least the error values determined for the plurality of visual identifiers. Preferably, the maximum potential error value for the visual identifier is used to define the error area, i.e. the maximum potential error value defines boundaries, typically upper and lower boundaries, of the error area relative to the critical area.

Ideally, wherein the visual identifier comprises a marker which is mounted upon one or more parts of a robot or object within the robotic cell environment.

A system for preventing collisions in a robotic cell environment is disclosed, the system comprising:
Means for determining a critical area for at least one visual identifier within the robotic cell environment;
Means for determining an error area for the visual identifier relative to the critical area;
Means for detecting movement of the visual identifier within the robotic cell environment corresponding to an action occurring within the robotic cell environment:
   Means for determining the location of the visual identifier;
   Means for determining if the location of the visual identifier lies within the error area;
   Wherein if the location of the visual identifier is determined to be within the critical area, allowing the action to continue within the robotic cell environment;
   Wherein if the location of the visual identifier is determined to be within the error area, performing one or more pre-determined actions.

### Brief Description of the drawings

A system and method for preventing collisions in a robotic cell environment will now be described by way of example with reference to the accompanying drawings in which:
Figure 1 illustrates a perspective view of a robotic cell environment;
Figure 2 illustrates a further perspective view of the robotic cell environment;
Figure 3 is a diagram illustrating a positional error between a visual identifier and a camera within the robotic cell environment;
Figure 4 illustrated a method for preventing collisions in a robotic cell environment; and
Figure 5 illustrates a system for preventing collisions in a robotic cell environment.

### Detailed Description

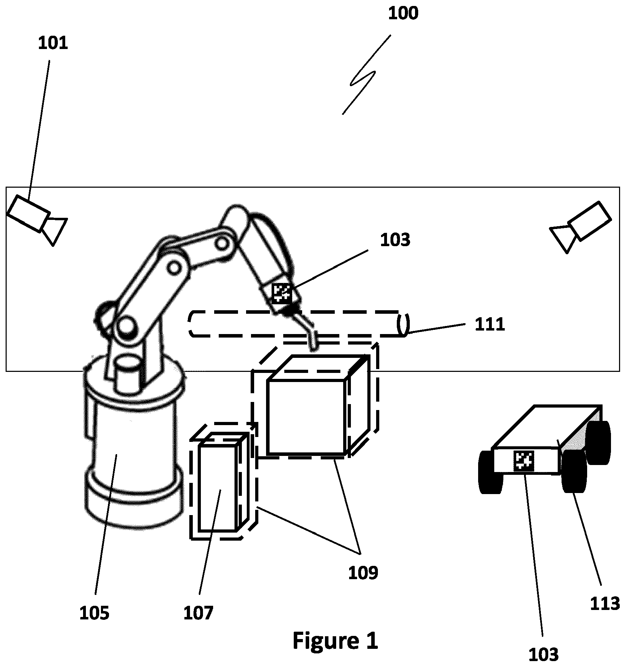

Referring now to the drawings, in particular Figure 1 thereof, there is shown generally indicated by the reference numeral 100 a robot cell environment. The robotic cell environment 100 comprises a robot 105, an image capture device 101 comprising a camera, one or more objects 107 which the robot may be configured to interact with. The robot 105 typically comprises one or more robot arms which have a plurality of rotational joints and which are operable to rotate about their bases, typically along an axis which is substantially perpendicular to the ground surface upon which they rest in-use. It should be understood that the robot cell 100 is not limited to two robots 105 and preferably comprises a plurality of robots 105. The robots 105 interact with the objects 107 which (not shown) may optionally be carried on a displacement means such as a conveyor belt or any suitable apparatus or means which is configured to position the objects 107 relative to one or more of the robots 105. The image capture device 101 preferably comprises a plurality of cameras which are typically arranged at a plurality of different positions and/or orientations within the robotic cell environment 100 such as to be able to observe and capture as much of the area of the robotic cell environment 100 in their field of view, in particular to enable the image capture device 101 to monitor the positioning and trajectory of the robots 105 and/or the objects 107. The robotic cell environment 100 may additionally comprise one or more autonomous robots 113 such as that shown in figure 1 which comprises an Autonomous Guided Vehicle (AGV). The robotic cell environment 100 may comprise a real physical environment or alternatively a simulated environment which is generated to define virtual representations of the elements making up the real physical environment which accordingly behave in the same way as those elements.

The robotic cell environment 100 further comprises a robotic cell controller to which the image capture device 101 and robots 105 are communicatively coupled to and operable to send and receive information from such as is the case in a real robotic cell environment. In a simulated robotic cell environment virtual models representing the various features identified above are able to accurately provide simulated representations and associated data obtainable therefrom. For example in a real environment, the one or more cameras 101 are typically communicatively connected via wired and/or wireless transmission means to the robotic cell controller which is configured to receive images obtained from the cameras 101. Where the robotic cell environment comprises a simulated robotic cell environment the robotic cell controller may be provided with images from the simulated i.e. virtual cameras 101. The robotic cell controller is further coupled to the robots 105. The robotic cell controller is configured to transmit instructions to the plurality of robots 105 based upon one or more characteristics of the received images, wherein the instructions may comprise instructions regarding the positioning and/or trajectory of one or more parts of the robot 105 which the robot 105 should alter and/or adopt.

The robotic cell controller is configured to recognise one more visual identifiers 103 within the image obtained from the one or more cameras 101. To this end the visual identifiers 103 may comprise one or more markers or the like which are positioned upon the robot 105 (as is shown in Figure 1), typically at various places thereof, or additionally or alternatively comprise visible features on the robots 105, objects 107 or other elements of the robotic cell environment or any combination thereof. The robotic cell controller comprises a computing device that is configured to execute one or more software programs for the operation of the one or more robots 105 during the manufacturing process. The robotic cell environment may be a physical robotic cell or a simulated robotic cell environment i.e. comprising a generated model which accurately reflects a real robotic cell environment, the simulated model comprising simulations of the various components and features of the robotic cell environment recited above such as robotic cell controller, robots 105, cameras 101, objects 107, visual identifiers 103 etc. The cameras 101, visual identifiers 103 and the robot cell controller define a computer vision system for the robotic cell environment 100.

In the embodiment illustrated in Figure 1, the visual identifiers 103 comprise a plurality of markers which are applied to one or more points on the robots 105 and can optionally be further applied to objects 107. The markers typically comprise ArUco markers which can be used for determining the locations and orientations of the one or more parts of the robots 107 using the images obtained from the cameras 101. ArUco markers are small 2D barcodes. Each ArUco marker corresponds to an identifier which can be encoded into a small grid of black and white pixels. The ArUco marker can be detected by the cameras and transmitted to the robotic cell controller which includes processing means, software such as preinstalled applications and applying the software to the images received from the cameras 101. For example the robotic cell controller may have installed thereon an ArUco decoding algorithm which is configured to locate, decode, and/or estimate the location and orientation of any ArUco markers in the field of view of the cameras 101.

The visual identifier 103 comprises a marker which can be attached or otherwise mounted on or coupled to one or more objects 107 within the robot cell environment, in particular (as shown in Figure 1) preferably upon one or more parts of the robot arm 107. The marker in this instance is composed by a wide black border and an inner binary matrix which determines its identifier. The marker size determines the size of the internal matrix. For instance, a marker size of 4x4 is composed by 16 bits. When the markers are photographed, the resulting image can include ArUco markers and the marker detection process, carried out upon the robotic cell controller, provides a list of detected markers within the camera image. Each detected marker can include the positions of the corners in the marker and the identification of the marker. The marker detection process can include two main steps. 1) Detection of marker candidates. In this step the image is analyzed, by the robotic cell controller, in order to find square shapes that are candidates to be markers. The analysis can begin with an adaptive thresholding to segment the markers, then contours are extracted from the threshold images and those that are not convex or not approximate to a square shape are discarded. 2) After the candidate marker detection, the robotic cell controller can determine if the candidate markers are actually markers by analyzing their inner codification. The marker bits of each marker are extracted by perspective transformation applied to obtain the marker in its canonical form. Then, the canonical image can be processed by the robotic cell controller to separate white and black bits. The marker image can be divided in different cells according to the marker size and the border size and the amount of black or white pixels on each cell is counted to determine if it is a white or a black bit.

In other embodiments (not shown), the location and orientation of the robots 105 and/or the parts thereof, and/or objects 107 can be determined without using markers and instead using advanced computer vision algorithm implementations stored upon the robotic cell controller. In these embodiments, the cameras 101 can use the visible features on the robots 105, and/or objects 107 instead of markers as visual identifiers 103. To this end the robotic cell controller is typically pre-programmed with algorithms configured to recognise the shape or other visually recognizable features of the robots 105 and/or the parts thereof, and/or objects 107. In one embodiment, the cameras 101 and associated robotic cell controller 105 can apply a photogrammetry process which can convert the photographs from the cameras 101 into 3D models of the robots 105, and/or objects 107 for use in the simulated model.

The computer vision algorithm, which is typically performed on the robotic cell controller using information provided by the cameras 101 regarding the scene of the robotic cell environment 101, the scene comprising the view as seen from the camera(s) 101, is typically setup as follows: 1) Each object 107 on the scene is marked by a visual identifier 103. Commonly the objects are: one or more parts of the robot 105 such as robot arms, robot basement point, robot gripper etc. and/or one or more parts of the robotic cell environment such as walls, columns, ceilings etc. and/or the cameras 101, and/or AGVs 113 etc. 2) The marked elements, i.e. those features upon which a visual identifier 103 has been mounted, of the robotic cell environment 101 are identified by the computer vision algorithm as mentioned previously, dimensions and positions of the markers and associated elements are measured, acquired parameters are used to provide the robot controller with the coordinates of the elements within the robotic cell environment and optionally use the coordinates of the elements in the simulated robotic cell environment where applicable. Additionally it should be understood that the simulated robotic cell environment may be created using pre-programmed information or information obtained from the internet or the like.

Static relations between the robots 105, objects 107 and other elements within the robotic cell environment must be precisely calibrated before operation. During a manufacturing process robotic cell environments 100 are often altered due to changes in production or physical changes of the environment. Calibration is needed to adjust the software controlling the various elements, such software typically including computer vision algorithms, manipulation algorithms, general trajectory control and other numerical robot control means; it also could have additional optional facilities as artificial intelligence etc. Sometimes the calibration of the robotic cell environment 100 may not be precise enough. For example in the generation of a simulated model which is intended to be reflective of a real robotic cell environment, some mismatches between the robot kinematics and a real robot instance might exist. For example, even where identical position information is provided for two different robots, the robots 105 will in most cases not end up in the same physical position. This is due to the fact that the location and position information provided to the robots 105, typically comprising Cartesian coordinates, will not provide perfect identical origin of the coordinates and orientation. Furthermore, with respect to the robot 105, the coordinates are in most cases not perfectly linearly distributed. For example it is typically manipulator geometric errors which are responsible for positioning errors between the robots 105 and the objects 107 which the robots are intended to interact with and manipulate. This can be due to errors in link lengths and joint offsets of the different parts of the robots 105, the end-effector positioning errors can be also caused by non-perfect assembling of different links and arise in shifting and/or rotation of the frames associated with different elements, which are normally assumed to be matched and aligned. It is clear that the geometric errors do not vary with the manipulator configuration, while their influence on the positioning accuracy depends on the latter. At present, there exist various calibration techniques that are able to calibrate the manipulator geometric model using different modelling, measurement and identification methods. The identified errors can be efficiently compensated either by adjusting the controller input (the target point) or by direct modification of the model parameters used in the robot controller within the simulated robotic cell environment.

Besides that mentioned above, there are several other reasons why there might be dynamics in the robotic cell, which are difficult to predict, for example: In a flexible manufacturing environment the manufacturing process could be changed in real-time, some operations could be changed or added; new manufacturing processes could be added using the same equipment (the same robots could assemble several different products in parallel) for better workshop capacity; and/or erroneous situations such as inspected stable object movement on the scene, slippage of the operated parts, inaccurate AGV stop position or trajectory etc.

Referring again to the robotic cell environment illustrated in Figure 1 there is shown one robot 105 and several objects 107 on the scene surveyed by the video cameras 101. Further visual identifiers 103 are shown mounted on the robot 105 and the AGV 113. Also shown in figure 1 are robot critical areas 111 and object critical areas 109. These critical areas comprise areas which require precise and accurate positioning of the robots 105 in their interaction with other elements of the robotic cell environment 100 such as the objects 107. In particular the robot critical area 111 defines a three dimensional space within the robotic cell environment 100, which is illustrated by a corridor defining a substantially cylindrical space. However it should be understood that this is intended for illustrative purposes only and that the space may comprise any other suitable shape, within which the robot 105 or more typically a part of the robot 105 will commonly move during its routine operations. The object critical areas 109 comprise the space surrounding the objects 107 within which the robot 105 must accurately displace for correct manipulation of the object 107.

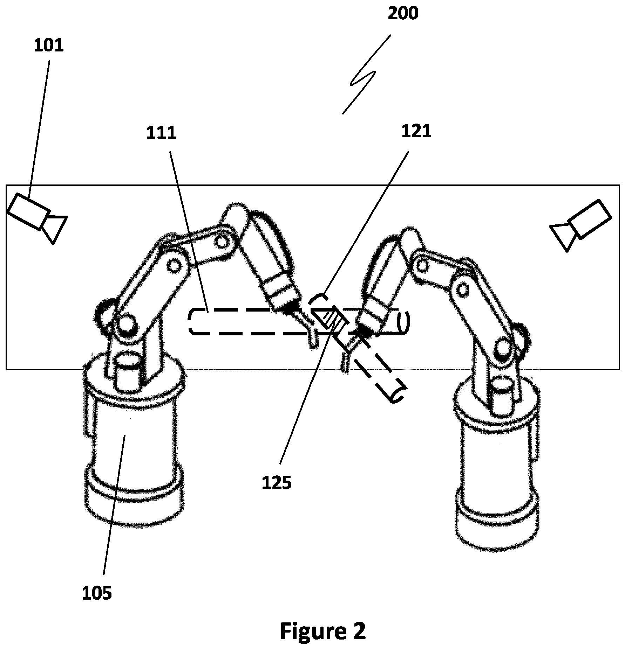

Referring now to Figure 2 there is shown generally indicated by the reference numeral 200 a second embodiment of a robotic cell environment. In this embodiment there is comprised a plurality of cameras 101 and more particularly first and second robots 105, each comprising a robotic arm. The positioning of the robots 105 shown is intended to reflect a possible in-use configuration of robots 105 within a manufacturing line were robots 105 may be located on opposing sides of a conveyor arrangement or the like. The first robot critical area 111 and the second robot critical area 121 are shown, again comprising substantially cylindrical spaces within the robotic cell environment. However, as can be seen, it is possible for the first and second robot critical areas 111, 121 to intersect as shown by the danger area 125. In-use this presents the situation where the first and second robots, typically parts thereof, may collide with one another leading to disruption of the manufacturing process with which the robots 105 are involved. In an alternative embodiment the AGV may have a defined AGV critical area (not shown) which may intersect with one or more of the robot critical areas. The instances where the robot critical areas may result in the possibility of the danger zone 125 may be where the expected predetermined trajectories of one or more of the robots 105 are changed dynamically due to some error or in intent of changing the manufacturing process, therefore critical areas must be monitored very thoroughly at all stages of the manufacturing process and in particular when real time changes are made to the manufacturing process. This requires that that the positions of the robots 105, the objects 107 and any other elements within the robotic cell environment 200 should be determined by the computer vision system with maximal accuracy.

In order to ensure maximal accuracy of the computer vision system it is important that the positional error i.e. the error between the real location of the visual identifier 103 within the robotic cell environment and a calculated location of the visual identifier 103 based on images obtained from the camera 101 is kept within a pre-determined acceptable limit. Determining this limit is described in UK Patent Application No. 1903289.5. The maximal allowable error of the object positioning i.e. the error between the real and calculated values of the visual identifiers 103 within the robot cell environment 100 is determined based upon the particular requirements of the manufacturing process within which the robot cell environment 100 is implemented and the dimensions of the objects 107 which the robots 105 will be required to interact with and manipulate. For example, during a manufacturing process, where the robot is required to perform an operation requiring the insertion of a cylindrical object within a corresponding substantially cylindrical space, the space having a diameter of about 100 millimetres, the allowable misplacement of the robot arm is 3 millimetres off of the vertical axis of the cylindrical space.

Advantageously by determining the maximal positional error for each visual identifier 103 this allows the use of cameras of lower resolutions for the detection of sub-pixel elements of the visual identifier and provides for the accurate estimation of the possible error between the real and calculated positions of the visual identifiers and the probability of the error. It should be understood that where mentioned that the term "coordinates in 3D space" is used it is intended to mean that the position of the described point is relative to a selected coordinate origin (X, Y, Z) axis. Selection of the coordinate system and the measurement units are implementation dependent. The units for example may be millimetres or centimetres or any appropriate standard unit of measurement.

A method for determining positional errors within a robotic cell environment 100, the method comprising the steps of:
a). Obtaining one or more pre-determined real values of the positioning and/or orientation of a visual identifier located within the robotic cell environment;
b). Acquiring an image of the robotic cell environment using a camera located at a first positon within the robotic cell environment;
c). Calculating one or more values of the positioning and/or orientation of the visual identifier using the acquired image;
d). Comparing the real value of the positioning and/or orientation of the visual identifier within the robotic cell environment with the calculated value of the positioning and/or orientation of the visual identifier within the robotic cell environment;
e). Determining an error value comprising the difference between the real and calculated values;
f). Repeating steps a) to e) for a plurality of other visual identifiers located within the robotic cell environment; and
g). Estimating a maximum potential error value for the calculated value of at least one of the visual identifiers of the plurality of visual identifiers based on at least the error values determined for the plurality of visual identifiers.

Preferably, step a). obtaining one or more pre-determined real values of the positioning and/or orientation of a visual identifier located within the robotic cell environment may comprise obtaining real measurements from a physical robotic cell environment. However alternatively the pre-determined real values could be obtained from a simulated model representing a physical robotic cell environment or further alternatively the pre-determined real values could be obtained from design data or any other suitable source of accurate values of positioning and/or orientation of a robotic cell environment. In a preferred embodiment a simulated or virtual model of a robotic cell environment is generated and the position of one or more robots 105 and the positon of one or more visual identifiers 103 are specified within the model, i.e. the positon and/or orientation of the visual identifiers typically relative to the one or more robots and/or one or more cameras therein. It should be understood that the generated model comprises virtual representations of the robotic cell environments and the plurality of features e.g. robots, visual identifiers, cameras, objects and/or conveyor, thereof which can therefore be referred to as "virtual features". As the model is generated based on user requirements and particularly user parameters the exact co-ordinate location in terms of position and/or orientation of the virtual features within the simulated robotic cell environment, in particular the visual identifiers, is accurately known and is therefore well suited for implementing the method described herein. It should be understood in the foregoing that the term "real value" is intended to mean values which are accurately known.

Accordingly as mentioned above, where the step a). comprises obtaining real values from a simulated model representing the robotic cell environment, step b.) may comprise acquiring an image of the robotic cell environment comprising a simulated robotic cell environment using a virtual camera located at least at a first positon within the simulated robotic cell environment. For example, where a simulated model is used the method may comprise the steps of:
a). Obtaining one or more pre-determined real values of the positioning and/or orientation of a visual identifier located within a simulated robotic cell environment;
b). Acquiring an image of the simulated robotic cell environment using a virtual or simulated camera located at a first positon within the simulated robotic cell environment;
c). Calculating one or more values of the positioning and/or orientation of the visual identifier within the simulated robotic cell environment using the acquired image;
d). Comparing the real value of the positioning and/or orientation of the visual identifier within the simulated robotic cell environment with the calculated value of the positioning and/or orientation of the visual identifier within the simulated robotic cell environment;
e). Determining an error value comprising the difference between the real and calculated values;
f). Repeating steps a) to e) for a plurality of other visual identifiers located within the simulated robotic cell environment; and
g). Estimating a maximum potential error value for the calculated value of at least one of the visual identifiers of the plurality of visual identifiers based on at least the error values determined for the plurality of visual identifiers;
Optionally, h). applying the maximum potential error value to a physical robotic cell environment.

In relation to the methods described previously, preferably the step of g). estimating a maximum potential error value for the calculated value of at least one of the visual identifiers of the plurality of visual identifiers based on the error values obtained for the plurality of visual identifiers, further comprises the step of determining an error distribution for the camera when located at the first position based on the differences between the real and calculated values for the plurality of visual identifiers and using the error distribution to estimate the maximum potential error value.

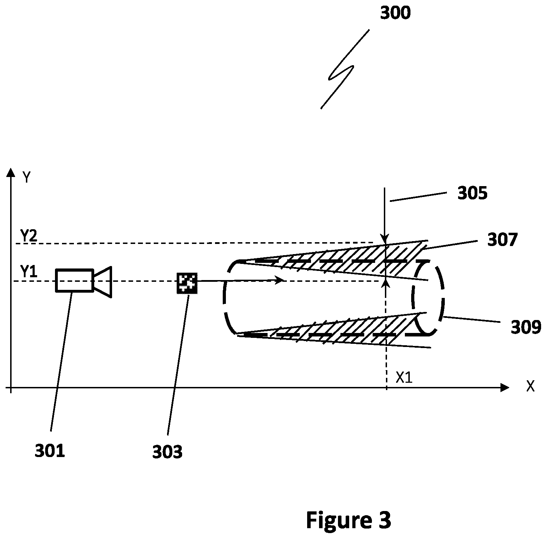

For the above method it is assumed that the internal parameters of the camera are pre-determined. Further as mentioned the number and real positions i.e. 3D co-ordinates of each of the visual identifiers is known prior to calculating the calculated values. For example in one implementation of the above method where the visual identifiers comprise a plurality of ArUco markers, the number of markers depends on the intended implementation, however it should be understood that the eventual results should be repeatable. In one implementation the method may comprise:
Finding and selecting a marker on the image acquired by the camera using the known algorithm. This typically includes finding the corners of the marker; the known algorithm for finding and selecting the marker on the picture detects points on the image that lie on the side shapes of the marker. The coordinates of these points are represented by an integer number of pixels. Further, on the found points, the coefficients of a straight line are calculated, such that the segment which forms the side shape can be found. Subsequently, the algorithm looks for the position of the corners of the marker as being the intersection of the corresponding lines of the sides. At this stage one or more of the corners could be located within a fractional part of the camera pixel. Calculating the calculated value of the positioning and/or orientation of the visual identifier using the acquired image, using the known algorithm for the coordinates calculations, obtaining the calculated virtual 3D coordinates for four corners of the selected marker: (Xcalc, Ycalc, Zcalc;). Comparing the pre-determined real coordinates and the calculated virtual ones, obtained using algorithm (Xreal, Yreal, Zreal) vs (Xcalc, Ycalc, Zcalc). Determining the error of the algorithm (deltaX, deltaY, deltaZ) i.e. the difference between the real and calculated values, see "the algorithm error". The coordinate system and measurement units depend on the implementation. The final algorithm error is calculated as a fraction of a pixel on the camera sensor. Repeating the steps of finding, calculating, comparing and determining for each marker located within the one or more images acquired by the camera. Using the error values obtained for each marker determining the error distribution for the selected camera. In some implementations this might be an array of numbers, in some cases, the closest known mathematics and probability distribution laws could be used. Using the results of the proposed algorithm, i.e. the error distribution, to estimate the worst case mismatch of the predicted position of the marker and its real position. The mismatch depends on the position of the camera (see Figure 3) relative to the marker. Based on the error estimations, determining the worst and/or best positions of the camera relative to one or more of the markers, and using these estimations to generate recommendations for better camera and marker positioning within the robot cell environment.

Referring now to Figure 3 there is shown, generally indicated by the reference numeral 300, a graph illustrating the difference in visual identifier position between the real visual identifier position and a calculated visual identifier position. For example, as is shown, the greater the distance from the camera 301 to the observed visual identifier 303, the greater the maximal positional error can be. For example were the visual identifier to adopt a position relative to the x-axis in accordance with the coordinate X1 305, then the maximal positional error along the y-axis could correspond to any point between Y1 and Y2 of the calculated position. In this example it is assumed for illustrative purposes that the camera has 0.2 pixel error, the visual identifier 303 comprises a marker having dimensions of 80x80 millimetres with the marker being at a position 6 meters away from the camera 301, the resulting coordinate determination error results in an 8 millimetres miss. This miss must be accounted during runtime operation. The plurality of co-ordinates where the marker 303 could actually be, but that differ from the ones reported and calculated by the computer vision algorithm belong to the error area 307. Once the calculated error area 307 lies outside of the critical area 309 illustrated by the cylindrical corridor, this indicates that the tracked visual identifier 303 could be out of the critical area 309. In a real environment, this occurrence must be accounted for in the definition of the critical areas 111, 121 and defined accordingly. Preferably, the maximum potential error value, as calculated in accordance with the steps mentioned above, for the visual identifier is used, at least in part, to define the error area for the visual identifier 303, i.e. the maximum potential error value may define the boundaries, typically upper and lower boundaries, of the error area relative to the critical area when the maximum potential error value lies outside of the critical area. For example the critical area can be defined as the area within which the one or more visual identifiers, more particularly the one or more parts of the robot upon which they are mounted, may displace within the robotic cell environment when carrying out one or more pre-determined actions. The predetermined actions correspond to movements of the robot and interactions of the robot with the objects of the robotic cell environment. Depending on the location of the visual identifier relative 303 to the camera 301 which embodies part of the computer vision system of the robotic cell environment, there will be a maximum positional error for the location of the visual identifier, this comprising the difference between the real location of the visual identifier and the calculated location based on the image acquired by the camera. When this maximum positional error for a visual identifier lies outside of the critical area, the upper and lower error values may define the upper and lower boundaries of the error area as shown in Figure 3. Additionally or alternatively the error areas may be pre-defined based on the critical areas of other visual identifiers within the robotic cell environment. Further additionally or alternatively the error areas may be defined based on a pre-determined tolerance e.g. plus or minus 5% of the critical area along one or more axis.

The definition of the critical areas 111, 121 for example, might be implemented in XML or JSON format. The critical areas can be of substantially cylindrical shape such as that shown in the figures, where it comprises a larger size than objects 107. When creating the simulated environment the simulator may be configured to define the object(s) 107 and the robotic critical areas 111, 121 of substantially cylindrical shape as follows:

```
 {
  "id":"##",
  "type":"detail",
  "class":"execution_data",
  "value":{
    "object_id":"plank_0",
    "type": "long_plank",
    "pose":{
      "p":{"x":0, "y":0, "z":0},
      "q":{"w":0, "x":0, "y":0, "z":0}
    },
    "timestamp": "some_timestamp",
    "is_valid": "true",
    "model": "ref_id",
    "name": "some_name",
    "attached": "gripper_id",
  }
  "weight": 2.0 //wight in kg.
  }
```

Example of the particular critical corridor description.

```
 {
 "id":"##",
  "type":"critical_area",
  "value":{
    "object_id":"area_0",
    "type": "cylinder",
    "dimensions": {
       "diameter": "100",
       "length": "2000",
    },
    "pose":{
      "p":{ "x":0, "y":0, "z":0, "Px":0, "Py":0, "Pz":0 },
       
    },
   }
  }
```

Therefore, particularly for a flexible automated manufacturing system where changes can be made to operation of the robots and the objects they interact within in real time, it is advantageous to provide a method to prevent robot collisions within the robotic cell environment by taking into account the maximal positional error for each visual identifier located therein. Accordingly the method embodying the present disclosure will continually monitor the critical areas whilst taking into account the maximal positional errors of the visual identifiers 103 and the corresponding robots 105 and objects 107 upon which they are mounted, wherein if the visual identifiers 103 and in particular the corresponding robot 105 adopts a position outside of the maximum potential error value threshold, then certain pre-defined actions will occur to avoid damage to the robots 105, the objects 107 or to avoid causing serious impact on the manufacturing process currently being undertaken at that time. Accordingly the present method implements closed loop feedback control which is provided by the intercommunication between the computer vision system i.e. the camera 101, visual identifiers 103 and the robot cell controller, and the robots 105.

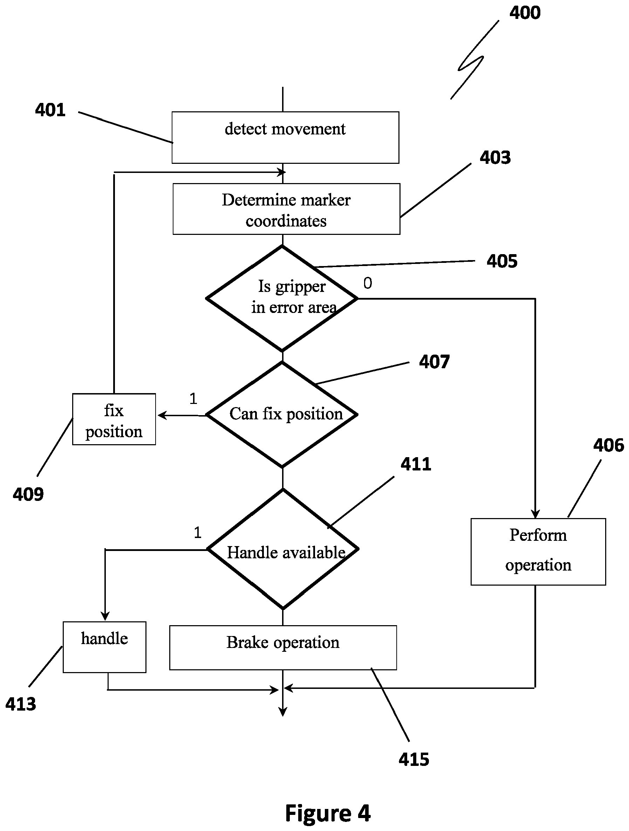

Referring now to Figure 4 there is shown, generally indicated by the reference numeral 400, a method for preventing collisions in a robotic cell environment. The method comprising:
a) Determining a critical area for at least one visual identifier within the robotic cell environment;
b) Determining an error area for the visual identifier relative to the critical area;
c) Detecting movement of the visual identifier within the robotic cell environment corresponding to an action occurring within the robotic cell environment 401:
d) Determining the location of the visual identifier 403;
e) Determining if the location of the visual identifier lies within the error area 405;
f) Wherein if the location of the visual identifier is determined to be within the critical area allowing the action to continue within the robotic cell environment 406;
g) Wherein if the location of the visual identifier is determined to be within the error area, performing one or more pre-determined actions.

The visual identifier 103 is typically mounted upon one or more parts of the robot 105. The movement of the visual identifier 103 within the robotic cell environment, which is typically tracked and calculations made based on the images received from the camera 101, and the action occurring within the robotic cell environment, correspond to the movement of the one or more parts of the robot 105. As mentioned previously the critical area comprises an area within which the robot is intended to displace within the robotic cell environment, such as to interact with the objects 107 located within the robotic cell environment. The error area comprises an area within which the robot 105 is not intended to displace within the robotic cell environment, such as the danger area 125 illustrated in Figure 2 wherein the robot 105 may collide with another robot or object located within the robotic cell environment in-use. The visual identifier 103 may be considered to be located within the error area when at least part of the visual identifier 103 has co-ordinates, typically Cartesian co-ordinates along X, Y and Z axis, which indicate its location within the error area. The part of the visual identifier 103 may occupy at least a pixel of the camera sensor of the camera 101. The pre-determined action comprises determining if the location of the visual identifier can be altered 407, wherein if the location can be altered, the method further comprises altering the position of the visual identifier 409, i.e. altering the location of the robot upon which it is mounted, and repeating steps d), e) and f) or g). Wherein if the location of the visual identifier cannot be altered, stopping movement of the one or more parts of the robot 415. Additionally or alternatively to stopping the movement of the robot 415, if the location of the visual identifier cannot be altered the method further comprises determining if there is a set action to be performed 411, and performing said set action 413. The set action may be determined based upon the error area and visual identifier in question or each error area may be associated with the same pre-set action. The pre-set action may comprise issuing a notification to a user within or in communication with the robotic cell environment via wired or wireless transmission means. For example, this may include issuing an audible or visual notification to the user. Some examples include issuing a notification informing the user that the robot is about to stop or warning the user that the robot is in the error area etc. The error area typically comprises the maximum positional error determined as described previously as comprising the difference between real and calculated positional errors of the location of the visual identifiers, for example when the critical area is defined the error area will be defined relative to this based upon at least the size of the critical area, the size of the visual identifier and the distance from the camera to the visual identifier.

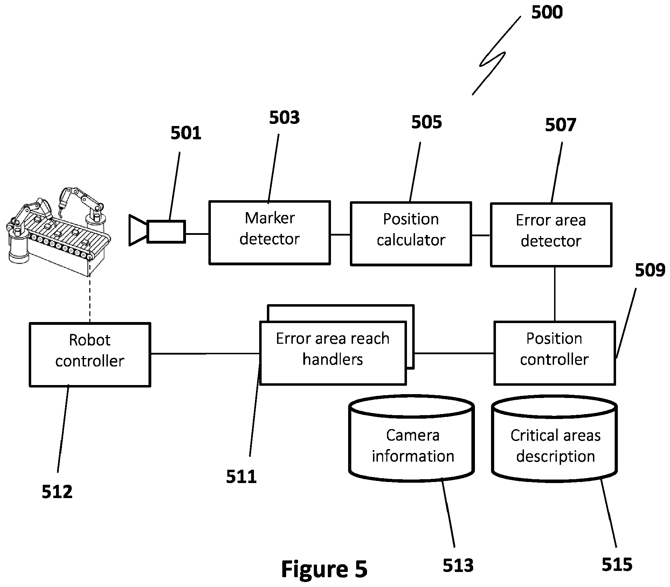

Referring now to figure 5 there is shown a diagram, generally indicated by the reference numeral 500 illustrating the architecture of a system for preventing collisions in a robotic cell environment. The system 500 comprises at least one or more of the following, at least one camera 501, a means for detecting the visual identifier 503, means for calculating the position of the visual identifier 505, a means for detecting when the visual identifier adopts a position within the robotic cell environment which is within the error area 507, means for determining the next action within the robotic cell environment 509, means for determining and performing pre-set actions 511 and a robot controller 512 which is operable to control directly or indirectly the movements of the robots within the robotic cell environment. Each of the means recited above are typically incorporated as separate modules or the like within the robot controller 512 which is communicatively coupled to the cameras 501 and the robots of the robotic cell environment. Alternatively the various means may each comprise separate processing devices or controllers which are operable to perform the corresponding functions. The various means, preferably the controller 512, are typically operable to receive and make calculations based on information regarding the characteristics of the cameras 513 and the definition of the critical areas 515 which will be heavily dependent on the particular functions which the robotic cell environment is intended to perform as part of the manufacturing process.

Each of the various means and controller recited above incorporate a software system stored on computer readable medium which is operable to implement the method of the maximal error estimation to allow for the identification of the error areas such as the danger areas for the robot trajectory and therefore automatically prevent possible failures. Referring again to Figure 5 the means for detecting the visual identifier 503 typically comprises a marker detector which is configured to identify the movement of the marker and extracts it from the video/image stream from the camera 501, and to identify the marker corners' coordinates. The means for calculating the position of the visual identifier 505 typically comprises a Position Calculator which is configured to determine the position of the robot hand based on the marker. The means for detecting when the visual identifier adopts a position within the robotic cell environment which is within the error area 507 typically comprises an Error Area Detector which is configured to determine if the robot is in the critical area or within an error area. The means for altering the position of the visual identifier within the robotic cell environment 509 typically comprises a Position Controller which is configured to make the decision of what next action should occur next in the robotic cell environment. The means for determining and performing pre-set actions 511 typically comprises error reach handlers which are configured to assign a set of assigned handlers for particular error areas. Each of the means recited may be defined as separate processing modules or as separate modules within the robot controller 512.

The above described system is capable to track several markers' movement and control several robots simultaneously. Advantageously the present disclosure automates the positioning analysis of the objects within the robotic cell environment in real-time (in the process of the product manufacturing). The disclosure improves the control of the robotized manufacturing process as it provides means by which to minimize risks of physical damage to elements making up the robotic cell environment, which are typically relatively expensive pieces of equipment. The disclosure further advantageously allows for optimal configuration planning of the workshop from the computer vision standpoint. The method and system is suitable for any automated manufacturing environment.

It will be understood that while exemplary features of the method and system for preventing collisions within a robotic cell environment have been described, that such an arrangement is not to be construed as limiting the disclosure to such features. The method for determining positional errors within a robotic cell environment may be implemented in software, firmware, hardware, or a combination thereof. In one mode, the method is implemented in software, as an executable program, and is executed by one or more special or general purpose digital computer(s), such as a personal computer (PC; IBM-compatible, Apple-compatible, or otherwise), personal digital assistant, workstation, minicomputer, or mainframe computer. The steps of the method may be implemented by a server or computer in which the software modules reside or partially reside.

Generally, in terms of hardware architecture, such a computer will include, as will be well understood by the person skilled in the art, a processor, memory, and one or more input and/or output (I/O) devices (or peripherals) that are communicatively coupled via a local interface. The local interface can be, for example, but is not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the other computer components.

The processor(s), i.e. of the controller, may be programmed to perform the functions of the method for determining positional errors within a robotic cell environment. The processor(s) is a hardware device for executing software, particularly software stored in memory. Processor(s) can be any custom made or commercially available processor, a primary processing unit (CPU), an auxiliary processor among several processors associated with a computer, a semiconductor based microprocessor (in the form of a microchip or chip set), a macro-processor, or generally any device for executing software instructions.

Memory is associated with processor(s) and can include any one or a combination of volatile memory elements (e.g., random access memory (RAM, such as DRAM, SRAM, SDRAM, etc.)) and non-volatile memory elements (e.g., ROM, hard drive, tape, CDROM, etc.). Moreover, memory may incorporate electronic, magnetic, optical, and/or other types of storage media. Memory can have a distributed architecture where various components are situated remote from one another, but are still accessed by processor(s).

The software in memory may include one or more separate programs. The separate programs comprise ordered listings of executable instructions for implementing logical functions in order to implement the functions of the modules. In the example heretofore described, the software in memory includes the one or more components of the method and is executable on a suitable operating system (O/S).

The present disclosure may include components provided as a source program, executable program (object code), script, or any other entity comprising a set of instructions to be performed. When a source program, the program needs to be translated via a compiler, assembler, interpreter, or the like, which may or may not be included within the memory, so as to operate properly in connection with the O/S. Furthermore, a methodology implemented according to the teaching may be expressed as (a) an object oriented programming language, which has classes of data and methods, or (b) a procedural programming language, which has routines, subroutines, and/or functions, for example but not limited to, C, C++, Pascal, Basic, Fortran, Cobol, Perl, Java, and Ada.

When the method is implemented in software, it should be noted that such software can be stored on any computer readable medium for use by or in connection with any computer related system or method. In the context of this teaching, a computer readable medium is an electronic, magnetic, optical, or other physical device or means that can contain or store a computer program for use by or in connection with a computer related system or method. Such an arrangement can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this disclosure, a "computer-readable medium" can be any means that can store, communicate, propagate, or transport the program for use by or in connection with the instruction execution system, apparatus, or device. The computer readable medium can be for example, but is not limited to, an electronic, magnetic, optical, electromagnetic, infrared, or semiconductor system, apparatus, device, or propagation medium. Any process descriptions or blocks in the Figures should be understood as representing modules, segments, or portions of code which include one or more executable instructions for implementing specific logical functions or steps in the process, as would be understood by those having ordinary skill in the art.

The above detailed description of embodiments of the disclosure is not intended to be exhaustive nor to limit the disclosure to the exact form disclosed. While specific examples for the disclosure are described above for illustrative purposes, those skilled in the relevant art will recognize various modifications are possible within the scope of the disclosure. For example, while processes and blocks have been demonstrated in a particular order, different implementations may perform routines or employ systems having blocks, in an alternate order, and some processes or blocks may be deleted, supplemented, added, moved, separated, combined, and/or modified to provide different combinations or sub-combinations. Each of these processes or blocks may be implemented in a variety of alternate ways. Also, while processes or blocks are at times shown as being performed in sequence, these processes or blocks may instead be performed or implemented in parallel or may be performed at different times. The results of processes or blocks may be also held in a non-persistent store as a method of increasing throughput and reducing processing requirements.

## Claims

1. A method for preventing collisions in a robotic cell environment, the method comprising:
a) Determining a critical area for at least one visual identifier within the robotic cell environment;
b) Determining an error area for the visual identifier relative to the critical area;
c) Detecting movement of the visual identifier within the robotic cell environment corresponding to an action occurring within the robotic cell environment:
d) Determining a location of the visual identifier;
e) Determining if the location of the visual identifier lies within the error area;
f) Wherein if the location of the visual identifier is determined to be within the critical area, allowing the action to continue within the robotic cell environment;
g) Wherein if the location of the visual identifier is determined to be within the error area, performing one or more pre-determined actions.

2. The method of claim 1, wherein the visual identifier is mounted upon one or more parts of a robot and the movement of the visual identifier and the action occurring within the robotic cell environment correspond to movement of the one or more parts of the robot.

3. The method of claim 2, wherein the critical area comprises an area within which the robot is intended to displace within the robotic cell environment.

4. The method of claim 2 or 3, wherein the error area comprises an area within which the robot is not intended to displace within the robotic cell environment.

5. The method of any of claims 2 to 4, wherein the pre-determined action comprises determining if the location of the visual identifier can be altered.

6. The method of claim 5, wherein if the location of the visual identifier can be altered, altering the location of the visual identifier and repeating steps d), e) and f) or g).

7. The method of claim 5, wherein if the location of the visual identifier cannot be altered, stopping movement of the one or more parts of the robot.

8. The method of claim 5 or 7, wherein if the location of the visual identifier cannot be altered, determining if there is a pre-set action to be performed, and performing the pre-set action.

9. The method of claim 8, wherein the pre-set action comprises issuing a notification to a user within or in communication with the robotic cell environment.

10. The method of claim 8 or 9, wherein each error area for each visual identifier has different pre-set action.

11. The method of claim 9, wherein the pre-set action comprises issuing an audible or visual notification to the user.

12. The method any preceding claim, wherein determining the critical area for at least one visual identifier within the robotic cell environment further comprises determining a plurality of critical areas for a plurality of visual identifiers within the robotic cell environment, and determining a plurality of corresponding error areas for each visual identifier.

13. The method of any preceding claim, wherein the visual identifier comprises a marker which is mounted upon one or more parts of a robot or an object within the robotic cell environment.

14. A system for preventing collisions in a robotic cell environment, the system comprising:
Means for determining a critical area for at least one visual identifier within the robotic cell environment;
Means for determining an error area for the visual identifier relative to the critical area;
Means for detecting movement of the visual identifier within the robotic cell environment corresponding to an action occurring within the robotic cell environment:
Means for determining a location of the visual identifier;
Means for determining if the location of the visual identifier lies within the error area;
Wherein if the location of the visual identifier is determined to be within the critical area, allowing the action to continue within the robotic cell environment;
Wherein if the location of the visual identifier is determined to be within the error area, performing one or more pre-determined actions.

15. The system of claim 14, configured to perform the method of any of claims 1 to 13.
